# EUROPEAN PATENT APPLICATION

(11) **EP 4 044 346 A1**
(43) Date of publication of application: **17.08.2022**
(21) Application number: 21887862.7
(22) Date of filing: 31.01.2021
(51) Int. Cl.: H01M 50/211, H01M 50/231, H01M 50/233, H01M 50/242, H01M 50/244, H01M 50/249, H01M 50/26, H01M 50/342, H01M 50/383, H01M 10/625, H01M 10/647, H01M 10/658, H01M 10/0525, B08B 17/02, B60L 50/64

(54) **BATTERY MODULE CAPABLE OF DELAYING THERMAL RUNAWAY AND VEHICLE USING SAME**

(30) Priority: 14.12.2020 CN 202011467698; 14.12.2020 CN 202022993563 U
(71) Applicant: Tianjin EV Energies Co., Ltd., Tianjin 300380 (CN)
(72) Inventor: ZHOU, Zhe, Tianjin 300380 (CN); ZHANG, Fuzeng, Tianjin 300380 (CN); CHEN, Baoguo, Tianjin 300380 (CN); XING, Zhibin, Tianjin 300380 (CN); CHEN, Baoli, Tianjin 300380 (CN); LANG, Wenqi, Tianjin 300380 (CN); LIU, Yulong, Tianjin 300380 (CN); CHENG, Yan, Tianjin 300380 (CN)
(74) Representative: Gevers Patents
(86) International application number: PCT/CN2021/074568
(87) International publication number: WO 2022/126841

(57) **Abstract**

Provided are a battery module delaying thermal runaway and a vehicle using the same, and the field of lithium-ion battery detection is related. The battery module delaying thermal runaway includes a box body and a plurality of thermal runaway sealing assemblies. The plurality of thermal runaway sealing assemblies have the same structure and are arranged side by side in the box body, and adjacent ones of the plurality of thermal runaway sealing assemblies are electrically connected to form the module. The box body includes a front-end plate and a back-end plate. Each of the plurality of thermal runaway sealing assemblies includes an enclosure and at least two cells. Foam for buffering and heat insulation is disposed between adjacent ones of the at least two cells. The enclosure coats the outer side of the at least two cells. The upper end of the enclosure is sealed, and two sides of the enclosure are opened and disposed to correspond to the front-end plate and the back-end plate of the box body. Each of the plurality of thermal runaway sealing assemblies, the front-end plate and the back-end plate form an independent sealed unit. In this manner, the speed of the thermal runaway of the module is effectively slowed down and heat spread is effectively slowed down.

## Description

### TECHNICAL FIELD

The present invention belongs to the field of lithium-ion battery detection and relates to a lithium-ion battery of a new energy vehicle and, in particular, a battery module delaying thermal runaway and a vehicle using the same.

### BACKGROUND

The lithium-ion battery has advantages such as light weight, low cost, high capacity, and long cycle life and is widely used in various fields of new energy vehicles, aerospace, and so on. With the increasing energy density of batteries, the risk of thermal runaway shows an upward trend. The battery thermal runaway refers to the accumulative enhancement of current and battery temperature when the battery is charged at a constant voltage and the battery is gradually damaged.

When the thermal runaway of pouch-type cells within a battery module occurs, there is no thermal isolation and independent sealing structure between the cells, the thermal runaway spreads rapidly, resulting in an abnormal increase in temperature, and chemical reactions will occur one after another, forming a chain reaction. A heat-temperature-reaction (HTR) cycle is the root cause of the chain reaction. Abnormal heating causes the increase in the temperature of the cells and initiates side reactions such as solid electrolyte interphase (SEI) decomposition, and the side reactions release more heat, forming the HTR cycle. A temperature-reaction (TR) cycle cycles at an extremely high temperature until the cells experience the temperature-reaction, causing damage to the battery and great safety hazards, and extending the time for the thermal runaway to spread. Controlling the speed of the thermal runaway may provide more time for safe escape and is conducive to improving the safety.

### SUMMARY

The problem to be solved by the present invention is to provide a battery module delaying thermal runaway and a vehicle using the same which have advantages of simple operation, rapid detection, high efficiency, and higher accuracy with elimination of the influence of human factors.

To solve the preceding technical problem, the technical solution adopted in the present invention is a battery module delaying thermal runaway. The battery module delaying thermal runaway includes a box body and a plurality of thermal runaway sealing assemblies, the plurality of thermal runaway sealing assemblies have the same structure and are arranged side by side in the box body, and adjacent ones of the plurality of thermal runaway sealing assemblies are electrically connected to form the module.

The box body includes a front-end board and a back-end board.

Each of the plurality of thermal runaway sealing assemblies includes an enclosure and at least two cells, foam for buffering and heat insulation is disposed between adjacent ones of the at least two cells, the enclosure coats an outer side of the at least two cells, an upper end of the enclosure is sealed, and two sides of the enclosure are opened and disposed to correspond to the front-end plate and the back-end plate of the box body.

Each of the plurality of thermal runaway sealing assemblies, the front-end plate, and the back-end plate form an independent sealed unit.

Furthermore, the box body further includes an upper cover and a lower shell, the lower shell is a quadrangular trough structure, the front-end plate and the back-end plate are disposed in parallel to be used as two sides of the lower shell, and the plurality of thermal runaway sealing assemblies are perpendicular to the front-end plate and the back-end plate.

Further, the upper cover is formed by bending a steel material, a thickness of the upper cover is 0.5 mm to 1 mm, the lower shell is a unitary structure tailor-welded by using an aluminum profile, and the upper cover and the lower shell are fixed as a whole by riveting or welding.

Further, an upper aerogel layer is disposed between an upper end face of the enclosure and the box body, the upper aerogel layer is integrally glued at a top of each enclosure and uniformly thick, an area of the upper aerogel layer is the same as an area of the top of the enclosure, and the upper aerogel layer is a back-glued sheet material and has a thickness of 1 to 2 mm.

Further, the front-end plate and the back-end plate are both provided with a plurality of vent holes, the plurality of vent holes on the front-end plate and the plurality of vent holes on the back-end plate respectively correspond to two longitudinal ends of the enclosure in the plurality of thermal runaway sealing assemblies, and each of the plurality of vent holes is provided with a respective sealing steel sheet.

Further, the sealing steel sheet is fixed at the respective one of the plurality of vent holes by glue or a hook structure, and the sealing steel sheet is capable of being opened only from inside to outside under the action of an internal pressure generated by the plurality of thermal runaway sealing assemblies.

Further, the front-end plate and the back-end plate are both multi-layer sheet structures, a multi-layer structure of the front-end plate is the same as a multi-layer structure of the back-end plate, a dust-proof film, a mica sheet, and a side aerogel layer are sequentially disposed on an inner side of the front-end plate from outside to inside, and the mica sheet and the side aerogel layer are provided with exhaust vents corresponding to the plurality of vent holes.

Further, the dust-proof film is a sheet film with the thickness of 0.1 to 0.2 mm, the dust-proof film is single-sided adhesive and glued on the inner side of the front-end plate through glue on a backside of the dust-proof film to block external dust and foreign matter from entering the plurality of thermal runaway sealing assemblies, and at the same time, in a case where of a high temperature inside the plurality of thermal runaway sealing assemblies, the dust-proof film melts to ensure that hot substances inside the plurality of thermal runaway sealing assemblies are discharged through the dust-proof film.

Further, the mica sheet is a sheet material formed by pressing a phlogopite material with a thickness of 1 to 2 mm, the mica sheet is double-sided adhesive, one side of the mica sheet is glued on an inner side of the dust-proof film, and the other side of the mica sheet is glued at the side aerogel layer so that hot substances of high-temperature directly impact the front-end plate and/or the back-end plate in the case of resisting the thermal runaway, and damage on the front-end plate and/or the back-end plate is delayed.

Further, the side aerogel layer is a sheet structure with the thickness of 1 to 2 mm, and in a case where the side aerogel layer combined with the mica sheet resists the thermal runaway, hot substances inside the battery module impact the front-end plate and the back-end plate, and a tight interference fit between the side aerogel layer and two ends of the enclosure eliminates an assembly gap, ensures sealability of two sides of each of the plurality of thermal runaway sealing assemblies, and prevent the hot substances from spreading between the plurality of thermal runaway sealing assemblies.

Further, the foam is a UL94-V0 grade flame-retardant and heat-insulating silica gel foam, and the foam provides a compression rebound of 0 to 80% of the thickness of the foam for an expansion of the at least two cells to provide a breathing space for the at least two cells.

Further, adjacent ones of the plurality of thermal runaway sealing assemblies are also provided with the foam to delay or block heat from being transferred from a top and a sidewall of the plurality of thermal runaway sealing assemblies to the interior of the plurality of thermal runaway sealing assemblies during the thermal runaway.

Further, heat-insulating glue for sealing is disposed at a sealing edge of the top of the at least two cells and the heat-insulating glue is a modified organic silica gel.

Further, the enclosure is U-shaped with an opening downward, two ends of the enclosure are opened, and two adjacent enclosures are clamped and blocked by a clamping piece and connected at a longitudinal position of upper ends of openings of the two adjacent enclosures.

Further, the clamping piece is a metal plate structure and has a zigzag structure, one side of the clamping piece is provided with two long positioning claws, two short positioning claws are disposed on two sides of each of the two long positioning claws, the two long positioning claws are respectively disposed outside tops of the two adjacent enclosures, and the two short positioning claws are disposed inside the tops of the two adjacent enclosures.

Further, one of two longitudinal ends of the plurality of thermal runaway sealing assemblies is provided with a cell lug insulation piece, the other one of the two longitudinal ends of the plurality of thermal runaway sealing assemblies is provided with an electrical connection insulation piece, and an aerogel strip for sealing is disposed on an outer side of the electrical connection insulation piece.

Further, the plurality of thermal runaway sealing assemblies are tightly combined with the front-end plate and the back-end plate, and a bottom of the plurality of thermal runaway sealing assemblies is fixedly glued to a bottom of the box body by thermally conductive structural glue to form a relatively independent sealing structure.

Further, heat-insulating glue is disposed between the top of the enclosure and the at least two cells and coated on the interior of the enclosure to glue the enclosure and the at least two cells into a unitary structure.

A vehicle uses the battery module delaying thermal runaway.

Compared with the related art, the present invention has advantages and positive effects described below.
1. The present invention can not only effectively slow down the heat diffusion between runaway sealing single assemblies, but also ensure that when the thermal runaway occurs in the cells of the runaway sealing single assembly, ejected hot substances can only be ejected from lugs on two sides, that is, openings on two sides of the enclosure, so as to achieve directional and orderly delayed ejection in the thermal runaway sealing assemblies within the battery module during the thermal runaway, thereby causing the module only to smoke within 10 minutes without fire and explosion as much as possible, providing as much time as possible for escape, and improving the safety factor in unexpected situations.
2. The present invention adopts the initiative U-shaped enclosure-wrapped pouch-type cell structure. This structure forms an independent thermal runaway sealing assembly with the thermal runaway ejection guide within the battery module. In the case of the thermal runaway of one thermal runaway sealing assembly occurs, other thermal runaway sealing assemblies are not immediately affected, thereby effectively slowing down the speed of the thermal runaway in the pouch-type cell module, effectively slowing down the heat spread, and effectively controlling the ejection direction of the pouch-type battery during the thermal runaway.
3. In the present invention, the heat-insulating glue is disposed between the top of the enclosure and the cells. The heat-insulating glue not only provides the heat insulation function, but also fixes the cells and the U-shaped enclosure. The upper aerogel layer is glued to the outer side of the top of the U-shaped enclosure. The upper aerogel layer is a back-glued sheet material with a thickness of 1 to 2 mm and integrally glued to the top of the U-shaped enclosure in each thermal runaway sealing assembly. The upper part of the upper aerogel layer is tightly pressed by using the upper cover. The upper aerogel layer combined with the upper cover and the heat-insulating glue on the inner side of the top of the U-shaped enclosure can provide top heat insulation for the top of each thermal runaway sealing assembly.
4. In the present invention, the foam for buffering and heat insulation is disposed between adjacent cells in the thermal runaway sealing assemblies. The foam provides the compression rebound of 0 to 80% of the thickness of the foam for the expansion of the cells to provide a breathing space for the cells, it is conducive for the cells to have sufficient breathing space, and at the same time, the foam has a relatively low thermal conductivity to delay heat transfer; the foam is disposed between adjacent thermal runaway sealing assemblies, in addition to the preceding functions, the foam can also delay or block heat from being transferred from the sidewall of the thermal runaway sealing assembly to the interior of the thermal runaway sealing assembly during the thermal runaway.
5. The front-end plate and the back-end plate are both multi-layer structures, the front-end plate and the back-end plate not only can effectively delay the direct impact of hot gas and hot substances on the front-end plate and the back-end plate from the inside during the thermal runaway, but also can delay the heat being transferred from the outside of the module to the interior of thermal runaway sealing assemblies without the thermal runaway.
6. In the present application, the sealing steel sheet structures on the front-end plate and the back-end plate of the battery module can achieve the directional control of ejection of the corresponding sealed structural units during the thermal runaway. The hot gas or hot substances inside the unit can be rapidly discharged through the sealing steel sheet structure units, and sealing steel sheets corresponding to other units without ejection can effectively block external hot substances from entering.

### BRIEF DESCRIPTION OF DRAWINGS

Drawings constituting a part of the present invention are intended to provide a further understanding of the present invention, and exemplary embodiments of the present invention and the description thereof are intended to explain the present invention and do not constitute an improper limitation of the present invention. In the drawings:
FIG. 1 is an exploded view of a battery module delaying thermal runaway according to the present invention;
FIG. 2 is a detailed view of part A in FIG. 1 according to the present invention;
FIG. 3 is a structure view of a thermal runaway sealing assembly according to the present invention;
FIG. 4 is an exploded view of a thermal runaway sealing assembly according to the present invention;
FIG. 5 is a structure view of a front-end plate of a lower box body in an exploded state according to the present invention;
FIG. 6 is a schematic view of an ejection of a battery module delaying thermal runaway in a thermal runaway state according to the present invention;
FIG. 7 is a structure view of a clamping piece according to the present invention; and
FIG. 8 is a structure view of a clamping piece fitting with an enclosure according to the present invention.

### Reference list

- 1: thermal runaway sealing assembly
- 11: cell
- 13: enclosure
- 14: heat-insulating glue
- 15: electrical connection insulation piece
- 16: lug insulation piece
- 17: aerogel strip
- 18: clamping piece
- 181: long positioning claw
- 182: short positioning claw
- 21: upper cover
- 22: lower box body
- 23: front-end plate
- 24: back-end plate
- 25: sealing steel sheet
- 26: vent hole
- 27: upper gel layer
- 30: foam

### DETAILED DESCRIPTION

It is to be noted that if not in collision, the embodiments and features therein in the present invention may be combined.

In the description of the present invention, it is to be understood that orientational or positional relationships indicated by terms "center", "longitudinal", "transverse", "above", "below", "front", "back", "left", "right", "vertical", "horizontal", "top", "bottom", "inside", "outside" and the like are based on the orientational or positional relationships illustrated in the drawings, which are merely for facilitating and simplifying the description of the present invention. These relationships do not indicate or imply that an apparatus or component referred to has a specific orientation and is constructed and operated in a specific orientation, and thus it is not to be construed as limiting the present invention. Additionally, terms such as "first" and "second" are merely for description and are not to be construed as indicating or implying relative importance or implicitly indicating the number of technical features as indicated. Thus, a feature defined as a "first" feature or a "second" feature may explicitly or implicitly include one or more of such features. In the description of the present invention, unless otherwise noted, the phrase of "a plurality of" means two or more.

In the description of the present invention, it is to be noted that unless otherwise expressly specified and limited, the term "mounted", "connected to each other", or "connected" should be construed in a broad sense as securely connected, detachably connected, or integrally connected; mechanically connected or electrically connected; directly connected to each other or indirectly connected to each other via an intermediary; or intraconnected between two components. For those of ordinary skill in the art, specific meanings of the preceding terms in the present invention may be understood based on specific situations.

Specific embodiments of the present invention will be described in detail below in conjunction with the drawings.

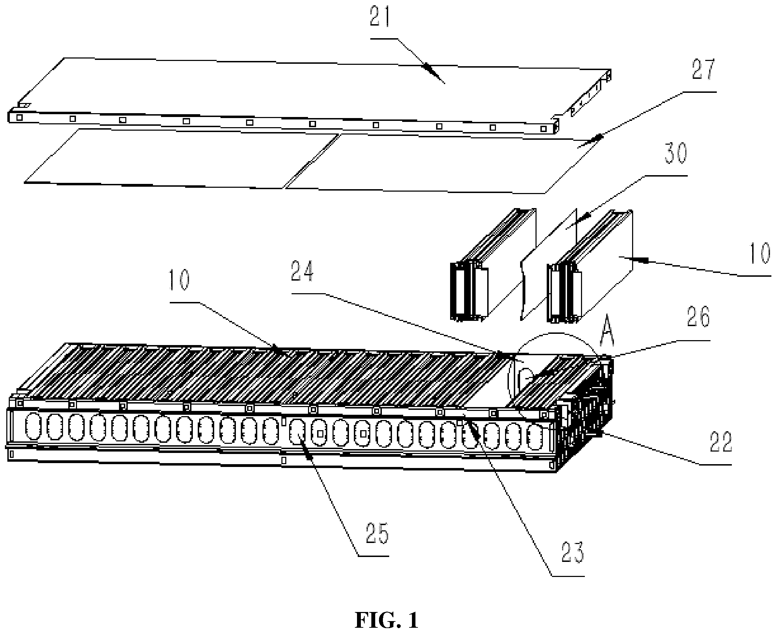

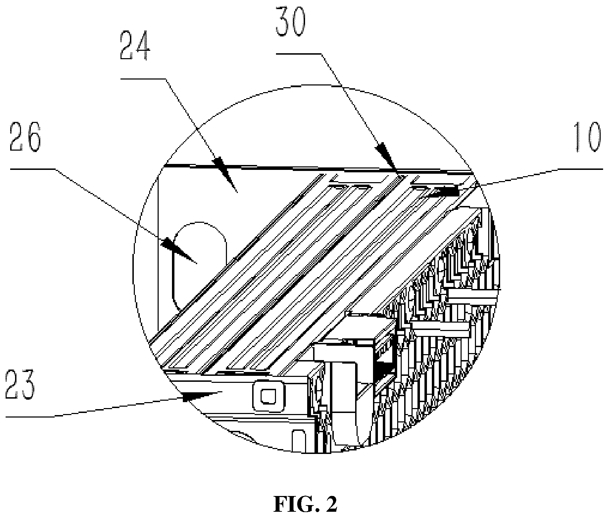

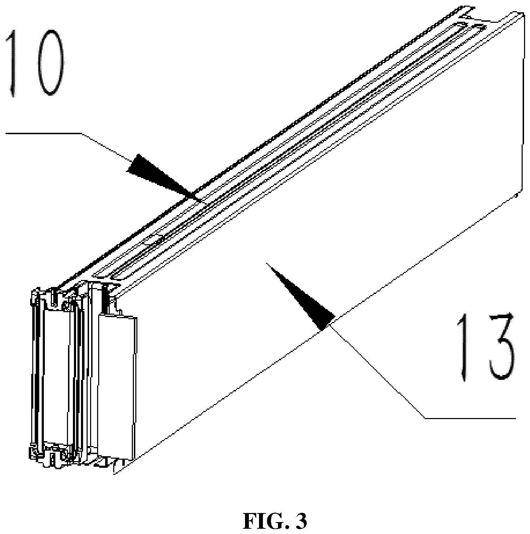

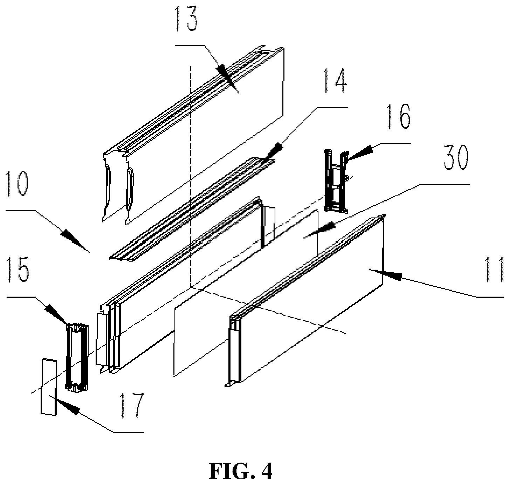

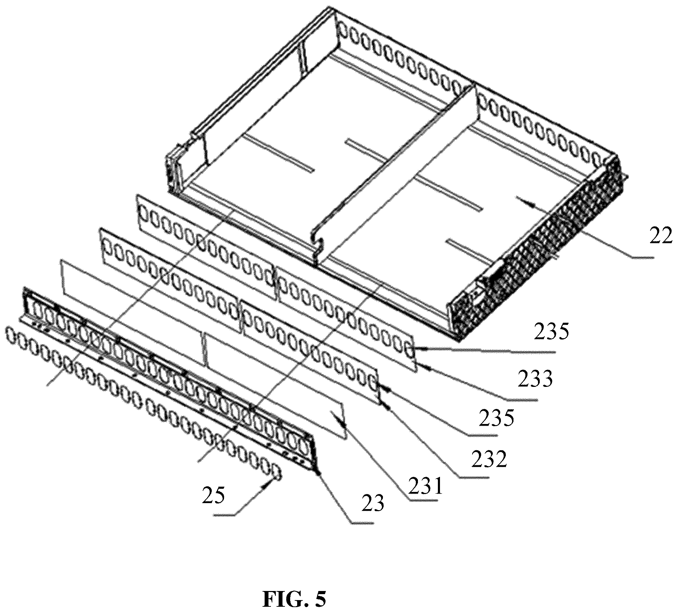

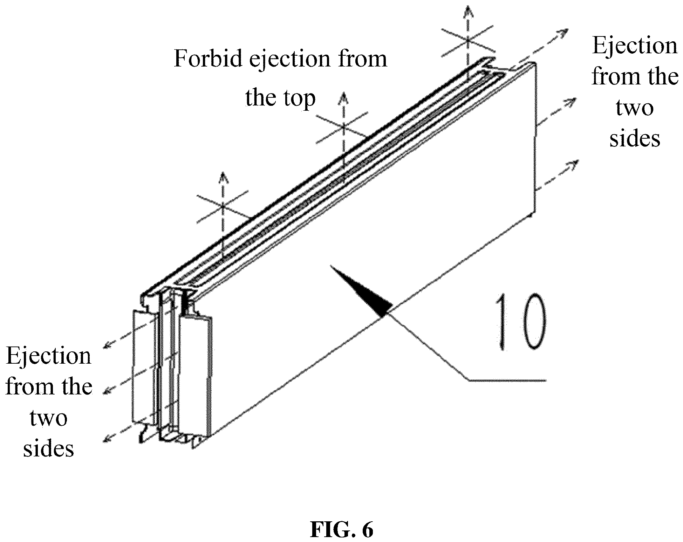

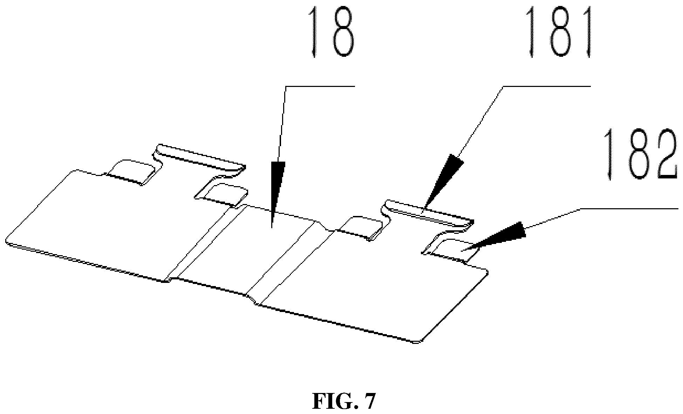

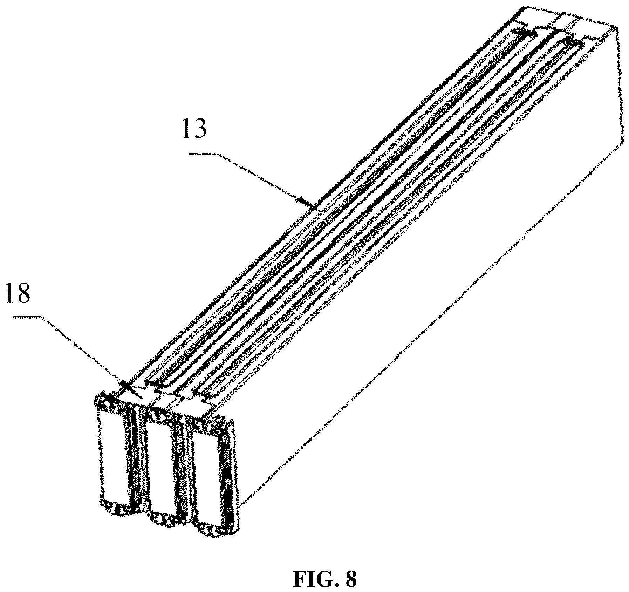

As shown in FIGS. 1 to 8, a battery module delaying thermal runaway includes a box body and multiple thermal runaway sealing assemblies 1. The multiple thermal runaway sealing assemblies 1 have the same structure and are arranged side by side in the box body. Adjacent thermal runaway sealing assemblies 1 are electrically connected to form the module. The box body includes a front-end plate 23 and a back-end plate 24. The thermal runaway sealing assembly includes an enclosure 13 and at least two cells 11. Foam 30 for buffering and heat insulation is disposed between adjacent cells 11. The enclosure 13 coats the outer side of the cells 11. The upper end of the enclosure 13 is sealed, and two sides of the enclosure 13 are opened and disposed to correspond to the front-end plate 23 and the back-end plate 24 of the box body. Each thermal runaway sealing assembly 1, the front-end plate 23, and the back-end plate 24 form an independent sealed unit. This structure can not only effectively slow down the heat diffusion between runaway sealing single assemblies, but also ensure that when the thermal runaway occurs in the cells 11 of the runaway sealing single assembly, ejected hot substances can only be ejected from lugs on two sides, that is, openings on two sides of the enclosure 13, so as to achieve directional and orderly delayed ejection in the thermal runaway sealing assembly 1 of the battery module during the thermal runaway, thereby causing the module 10 only to smoke within 10 minutes without fire and explosion as much as possible, providing as much time as possible for escape, and improving the safety factor in unexpected situations.

Preferably, the box body further includes an upper cover 21 and a lower shell. The lower shell is a quadrangular trough structure. The upper cover 21 and the lower shell form a box structure to fix the thermal runaway sealing assemblies 1 and be used as a carrier of the thermal runaway sealing assemblies 1 to form the battery module. The front-end plate 23 and the back-end plate 24 are disposed in parallel to be used as two sides of the lower shell. Honeycomb-shaped reinforcing ribs are disposed on outer sides of the two sides so that the strength of the lower shell is increased while the weight of the lower shell is increased as less as possible, thereby ensuring the characteristics of high strength and light weight of the battery module. The thermal runaway sealing assemblies 1 are disposed perpendicular to the front-end plate 23 and the back-end plate 24 so as to be compact, occupy less space, and facilitate the setting of vent holes 26.

Preferably, the upper cover 21 is formed by bending a steel material. The thickness of the upper cover 21 is 0.5 mm to 1 mm. The lower shell is a unitary structure tailor-welded by using an aluminum profile. The upper cover 21 and the lower shell are fixed as a whole by riveting or welding. The steel material of the upper cover 21 can effectively resist the impact of external high-temperature gas of thousands of degrees without being broken. The lower shell is made of aluminum so that the weight of the module can be effectively reduced while the strength is ensured and it is easy for process assembly splicing and laser welding.

Preferably, an upper aerogel layer is disposed between the upper end face of the enclosure 13 and the box body. The upper aerogel layer is glued at the top of each enclosure 13 and uniformly thick. The area of the upper aerogel layer is the same as the area of the top of the enclosure 13. The upper aerogel layer is a back-glued sheet material with a thickness of 1 to 2 mm.

Preferably, the front-end plate 23 and the back-end plate 24 are both provided with multiple vent holes 26, the multiple vent holes 26 on the front-end plate 23 and the multiple vent holes 26 on the back-end plate 24 respectively correspond to two longitudinal ends of the enclosure 13 in the thermal runaway sealing assembly 1, and each vent hole 26 is provided with a respective sealing steel sheet 25. Preferably, the sealing steel sheet 25 is fixed at each vent hole 26 by glue or a hook structure, and the sealing steel sheet 25 can be opened only from inside to outside under the action of an internal pressure generated by the thermal runaway sealing assembly 1. When the thermal runaway occurs in the thermal runaway sealing assembly 1, sealing steel sheets 25 corresponding to the front-end plate 23 and the back-end plate 24 of the thermal runaway sealing assembly 1 are opened from inside to outside under the action of the internal pressure, in addition, combining the coating-limitation function of the U-shaped enclosure 13 on the top and sidewall of the cells 11 in the thermal runaway sealing assembly 1, high-temperature and high-pressure gas and substances in the thermal runaway sealing assembly 1 can only be directionally discharged from the vent holes 26 on the front-end plate 23 and the back-end plate 24 to outside of the battery module; steel sheets on the front-end plate 23 and the back-end plate 24 corresponding to the thermal runaway sealing assemblies 1 without thermal runaway can delay or block the external high-temperature gas and substances from entering the units, thereby delaying or blocking the rapid transfer or diffusion of the thermal runaway between the thermal runaway sealing assemblies 1.

In this type of pouch-type cell module structure, through the guiding function of the U-shaped enclosure 13, the ejection occurs only at the lugs on two sides of the thermal runaway sealing assembly 1 when the thermal runaway occurs in the cells 11 of the thermal runaway sealing assembly 1. In conjunction with the sealing and heat insulation of the thermal runaway sealing assembly 1 and the directional outward opening protection of the sealing steel sheets 25 on the front-end plate 23 and the back-end plate 24, the directional ejection control of hot gas and substances during the thermal runaway can be achieved, the heat diffusion between the thermal runaway sealing assemblies 1 can be effectively slowed down or blocked, and directional and orderly delayed ejection of thermal runaway sealing assemblies 1 in a large module can be achieved.

Preferably, the front-end plate 23 and the back-end plate 24 are both multi-layer sheet structures, the multi-layer structure of the front-end plate 23 is the same as the multi-layer structure of the back-end plate 24, a dust-proof film, a mica sheet, and a side aerogel layer are sequentially disposed on an inner side of the front-end plate 23 from outside to inside, and the mica sheet and the side aerogel layer are provided with exhaust vents corresponding to the vent holes. The multi-layer sheet structure can effectively delay the direct impact of hot gas and substances on the front-end plate 23 and the back-end plate 24 from inside during the thermal runaway and effectively delay the heat being transferred from the outside of the module to the interior of the thermal runaway sealing assemblies 1 without the thermal runaway at the same time.

Preferably, the dust-proof film is a sheet film with the thickness of 0.1 to 0.2 mm, the dust-proof film is single-sided adhesive and glued on the inner side of the front-end plate 23 to block external dust and foreign matter from entering the thermal runaway sealing assemblies 1, and at the same time, in the case of a high temperature inside the thermal runaway sealing assemblies, the dust-proof film melts to ensure that hot substances inside the thermal runaway sealing assemblies 1 are discharged through the dust-proof film.

Preferably, the mica sheet is a sheet material formed by pressing a phlogopite material and has a thickness of 1 to 2 mm, the mica sheet is double-sided adhesive, one side of the mica sheet is glued on the inner side of the dust-proof film, and the other side of the mica sheet is glued to the side aerogel layer so that hot substances of high temperature directly impact the front-end plate 23 and/or the back-end plate 24 in the case of resisting the thermal runaway, damage on the front-end plate 23 and/or the back-end plate 24 is delayed, and the continuous high temperature of 900 °C can be withstood.

Preferably, the side aerogel layer is a sheet structure with the thickness of 1 to 2 mm, when the side aerogel layer combined with the mica sheet resists the thermal runaway, hot substances inside the battery module impact the front-end plate 23 and the back-end plate 24, and a tight interference fit between the side aerogel layer and two ends of the enclosure 13 eliminates an assembly gap, ensures the sealability of two sides of the thermal runaway sealing assembly, and prevents the hot substances from spreading between the thermal runaway sealing assemblies 1.

Preferably, the foam 30 is a UL94-V0 grade flame-retardant and heat-insulating silica gel foam 30 and provides a compression rebound of 0 to 80% of the thickness of the foam 30 for the expansion of the cells 11 to provide a breathing space for the cells 11 so that the cells 11 have sufficient breathing space, and at the same time, the foam 30 has a relatively low thermal conductivity to delay the heat transfer. More preferably, adjacent thermal runaway sealing assemblies 1 are also provided with the foam 30 with the preceding material to delay or block heat from being transferred from the sidewall of the thermal runaway sealing assembly 1 to the interior of the thermal runaway sealing assembly 1 during the thermal runaway.

Preferably, the heat-insulating glue for sealing is disposed at the sealing edge of the top of the cell and the heat-insulating glue is a modified organic silica gel. The glue has a relatively low thermal conductivity and can effectively insulate and block external heat from being rapidly transferred to the cells 11. The glue has stable performance at a high or low temperature and can work for a long time at -40 + 120 °C.

Preferably, the enclosure 13 is U-shaped with an opening downward, and two ends of the enclosure 13 are opened. The enclosure 13 locates and protects the side surface of the pouch-type cell 11. The length of the enclosure 13 is greater than the length of pouch-type cell 11. The pouch-type cell 11 is centrally disposed in the enclosure 13. Two adjacent enclosures 13 are clamped and blocked by a clamping piece 18 at longitudinal positions of openings of the two adjacent enclosures. The clamping piece 18 is a metal plate structure and has a zigzag structure. One side of the clamping piece 18 is provided with two long positioning claws. Two short positioning claws 182 are disposed on two sides of each long positioning claw 181. The two long positioning claws 181 are respectively disposed outside tops of two adjacent enclosures, and the short positioning claws 182 are disposed inside the tops of the enclosures. The long side of the clamping piece 18 is aligned with longitudinal front-and-back outer edges of the enclosure and may fix multiple sets of thermal runaway sealing assemblies 1 to form a whole, enhancing the stability of connections between multiple thermal runaway sealing assemblies 1. When the thermal runaway occurs in the cells 11 of the unit, the U-shaped enclosure 13 may guide the thermal runaway ejection of the cells 11 such that the ejection of the cell 11 can only occur at the openings on two sides of the U-shaped enclosure 13, thereby effectively preventing the ejection from the top in the thermal runaway assembly 1.

Preferably, one of two longitudinal ends of the thermal runaway sealing assembly 1 is provided with a lug insulation piece 16 of the cell 11, and the other longitudinal end of the thermal runaway sealing assembly 1 is provided with an electrical connection insulation piece 15 so that the insulation is ensured while multiple sets of thermal runaway sealing assemblies 1 are electrically connected. An aerogel strip 17 for sealing is disposed on the outer side of the electrical connection insulation piece 15 so that the sealing of the side end is achieved, external impurities or heat are prevented from entering, the heat dissipation to the outside in a thermal runaway state is delayed, and the sealability of the thermal runaway sealing assembly 1 is improved.

Preferably, the thermal runaway sealing assembly 1 is tightly combined with the front-end plate 23 and the back-end plate 24, and the bottom of the thermal runaway sealing assembly 1 is fixedly glued to the bottom of the box body by thermally conductive structural glue so that a relatively independent sealing structure is formed. When the thermal runaway of one thermal runaway sealing assembly 1 occurs, hot substances in the thermal runaway sealing assembly 1 are discharged directionally and rapidly from the module, and the heat is not immediately transferred to adjacent or other thermal runaway sealing assemblies 1, thereby effectively delaying the spread of the thermal runaway.

Preferably, the heat-insulating glue 14 is disposed between the top of the enclosure 13 and the cells 11 and coated on the interior of the enclosure 13 so that the enclosure 13 and the cells 11 are glued into a unitary structure. The heat-insulating glue 14 not only insulates heat, but also fixes the cells 11 and the U-shaped enclosure 13. The outer side of the top of the U-shaped enclosure 13 is glued to the upper aerogel layer. The upper aerogel layer is a back-glued sheet material with a thickness of 1 to 2 mm and integrally glued to the top of the U-shaped enclosure 13 in each thermal runaway sealing assembly 1. If the upper aerogel layer is too thick, the weight of the module is affected and the performance is not much improved. The upper part of the upper aerogel layer is tightly pressed by the upper cover 21. The upper aerogel layer combined with the upper cover 21 and the heat-insulating glue 14 on the inner side of the top of the U-shaped enclosure 13 insulate heat for the top of each thermal runaway sealing assembly 1.

A vehicle using the preceding battery module has advantages of controllable and delayable thermal runaway and high safety.

An embodiment of the present invention is described in detail above, but the content is only a preferred embodiment of the present invention and not to be construed as limiting the scope of implementation of the present invention. All equivalent variations and improvements made in accordance with the scope of application of the present invention should still fall within the scope of the patent of the present invention.

## Claims

1. A battery module delaying thermal runaway, comprising a box body and a plurality of thermal runaway sealing assemblies, wherein the plurality of thermal runaway sealing assemblies have a same structure and are arranged side by side in the box body, and adjacent ones of the plurality of thermal runaway sealing assemblies are electrically connected to form the battery module;
wherein the box body comprises a front-end plate and a back-end plate;
each of the plurality of thermal runaway sealing assemblies comprises an enclosure and at least two cells, foam for buffering and heat insulation is disposed between adjacent ones of the at least two cells, the enclosure coats an outer side of the at least two cells, an upper end of the enclosure is sealed, and two sides of the enclosure are opened and disposed to correspond to the front-end plate and the back-end plate of the box body; and
each of the plurality of thermal runaway sealing assemblies, the front-end plate, and the back-end plate form an independent sealed unit.

2. The battery module delaying thermal runaway of claim 1, wherein the box body further comprises an upper cover and a lower shell, the lower shell is a quadrangular trough structure, the front-end plate and the back-end plate are disposed in parallel to be used as two sides of the lower shell, and the plurality of thermal runaway sealing assemblies are disposed perpendicular to the front-end plate and the back-end plate.

3. The battery module delaying thermal runaway of claim 2, wherein the upper cover is formed by bending a steel material, a thickness of the upper cover is 0.5 mm to 1 mm, the lower shell is a unitary structure tailor-welded by using an aluminum profile, and the upper cover and the lower shell are fixed as a whole by riveting or welding.

4. The battery module delaying thermal runaway of any one of claims 1 to 3, wherein an upper aerogel layer is disposed between an upper end face of the enclosure and the box body, the upper aerogel layer is integrally glued at a top of each enclosure and has a uniform thickness, and the upper aerogel layer is a back-glued sheet material with a thickness of 1 to 2 mm.

5. The battery module delaying thermal runaway of any one of claims 1 to 3, wherein the front-end plate and the back-end plate are both provided with a plurality of vent holes, the plurality of vent holes on the front-end plate and the plurality of vent holes on the back-end plate respectively correspond to two longitudinal ends of the enclosure in each of the plurality of thermal runaway sealing assemblies, and each of the plurality of vent holes is provided with a respective sealing steel sheet.

6. The battery module delaying thermal runaway of claim 5, wherein the sealing steel sheet is fixed at the respective one of the plurality of vent holes by glue or a hook structure, and the sealing steel sheet is capable of being opened only from inside to outside under an action of an internal pressure generated by the plurality of thermal runaway sealing assemblies.

7. The battery module delaying thermal runaway of claim 5, wherein the front-end plate and the back-end plate are both multi-layer sheet structures, a multi-layer structure of the front-end plate is the same as a multi-layer structure of the back-end plate, a dust-proof film, a mica sheet, and a side aerogel layer are sequentially disposed on an inner side of the front-end plate from outside to inside, and the mica sheet and the side aerogel layer are provided with exhaust vents corresponding to the plurality of vent holes.

8. The battery module delaying thermal runaway of claim 7, wherein the dust-proof film is a sheet film with a thickness of 0.1 to 0.2 mm, the dust-proof film is single-sided adhesive and glued on the inner side of the front-end plate to block external dust and foreign matter from entering the plurality of thermal runaway sealing assemblies, and at the same time, in a case of a high temperature inside the plurality of thermal runaway sealing assemblies, the dust-proof film melts to ensure that hot substances inside the plurality of thermal runaway sealing assemblies are discharged through the dust-proof film.

9. The battery module delaying thermal runaway of claim 7, wherein the mica sheet is a sheet material formed by pressing a phlogopite material and has a thickness of 1 to 2 mm, the mica sheet is double-sided adhesive, one side of the mica sheet is glued on an inner side of the dust-proof film, and the other side of the mica sheet is glued on the side aerogel layer so that hot substances of high-temperature directly impact the front-end plate and/or the back-end plate in a case of resisting the thermal runaway, and damage on the front-end plate and/or the back-end plate is delayed.

10. The battery module delaying thermal runaway of claim 7, wherein the side aerogel layer is a sheet structure with a thickness of 1 to 2 mm, and in a case where the side aerogel layer combined with the mica sheet resists the thermal runaway, hot substances inside the battery module impact the front-end plate and the back-end plate, a tight interference fit between the side aerogel layer and two ends of the enclosure eliminates an assembly gap, ensures sealability of two sides of each of the plurality of thermal runaway sealing assemblies, and prevents the hot substances from spreading between the plurality of thermal runaway sealing assemblies.

11. The battery module delaying thermal runaway of claim 1, wherein the foam is a UL94-VO grade flame-retardant and heat-insulating silica gel foam, and the foam provides a compression rebound of 0 to 80% of a thickness of the foam for an expansion of the at least two cells to provide a breathing space for the at least two cells.

12. The battery module delaying thermal runaway of claim 11, wherein adjacent ones of the plurality of thermal runaway sealing assemblies are further provided with the foam to delay or block heat from being transferred from a top and a sidewall of the plurality of thermal runaway sealing assemblies to interior of the plurality of thermal runaway sealing assemblies in a case of the thermal runaway.

13. The battery module delaying thermal runaway of claim 1, wherein heat-insulating glue for sealing is disposed at a sealing edge of a top of the at least two cells, and the heat-insulating glue is a modified organic silica gel.

14. The battery module delaying thermal runaway of claim 1, wherein the enclosure is U-shaped with an opening downward, two ends of the enclosure are opened, and two adjacent enclosures are clamped and blocked by a clamping piece and connected at a longitudinal position of upper ends of openings of the two adjacent enclosures.

15. The battery module delaying thermal runaway of claim 14, wherein the clamping piece is a metal plate structure and has a zigzag structure, one side of the clamping piece is provided with two long positioning claws, two short positioning claws are disposed on two sides of each of the two long positioning claws, the two long positioning claws are respectively disposed outside tops of two adjacent enclosures, and the two short positioning claws are disposed inside the tops of the two adjacent enclosures.

16. The battery module delaying thermal runaway of claim 1, wherein one of two longitudinal ends of the plurality of thermal runaway sealing assemblies is provided with a cell lug insulation piece, and the other one of the two longitudinal ends of the plurality of thermal runaway sealing assemblies is provided with an electrical connection insulation piece, wherein an aerogel strip for sealing is disposed on an outer side of the electrical connection insulation piece.

17. The battery module delaying thermal runaway of claim 1, wherein the plurality of thermal runaway sealing assemblies are tightly combined with the front-end plate and the back-end plate, and a bottom of the plurality of thermal runaway sealing assemblies is fixedly glued to a bottom of the box body by thermally conductive structural glue to form a relatively independent sealed structure.

18. The battery module delaying thermal runaway of claim 1, wherein heat-insulating glue is disposed between a top of the enclosure and the at least two cells and coated on interior of the top of the enclosure to glue the enclosure and the at least two cells into a unitary structure.

19. A vehicle using the battery module delaying thermal runaway of any one of claims 1 to 18.
